# EUROPEAN PATENT APPLICATION

(11) **EP 1 017 119 A1**
(43) Date of publication of application: **05.07.2000**
(21) Application number: 99125860.9
(22) Date of filing: 24.12.1999
(51) Int. Cl.: H01M 2/12

(54) **Vent plug for multi-cell electrical accumulator**

(30) Priority: 30.12.1998 IT TO981102
(71) Applicant: SOCIETA' INDUSTRIALE ACCUMULATORI S.r.l., 24058 Romano di Lombardia (Bergamo) (IT)
(72) Inventor: Fossati, Giuseppe, 24050 Mozzanica (Bergamo) (IT); Ferla, Giordano, 26010 Capralba (Cremona) (IT)
(74) Representative: Rambelli, Paolo

(57) **Abstract**

A plug carrier for accumulator batteries which includes: a plurality of plug bodies (8) for insertion into complementary holes (12) in the battery cover; and an interconnecting carrier (14) connecting the said plug bodies (8); the plug bodies (8) and the carrier (14) forming a monolithic unit; the plug bodies (8) are connected to the said carrier (14) by yieldable interconnecting means (16) which allow the plug bodies (8) to move relative to the carrier (14) in order to be able to align the plug bodies (8) with the holes (12) in the battery cover.

## Description

The present invention relates to a plug carrier for batteries and to a battery which includes such a carrier.

In particular, the invention relates to a plug carrier which includes a plurality of plug bodies provided for insertion into complementary holes in the battery cover and an interconnecting carrier shaped as a plate or shell which connects the plug bodies to each other.

Plug carriers are known in the prior art which are operable to hold together a plurality of plug bodies in order to make them easier to fit and to hide the plugs from view.

In such carriers, also known as "plug strips", the plug bodies are supported on the interconnecting carrier by frictional slide means, which allow the plugs a limited longitudinal movement relative to the supporting carrier.

This movement or play makes it possible to ensure that the axes of the plugs and the holes in the cover are aligned, thereby ensuring an effective seal between the plugs and the cover.

The object of the present invention is to provide a carrier, with a plurality of plug bodies, which can be produced both simply and economically and is, at the same time, easier to fit onto the cover, thereby also ensuring that an optimum seal is provided between the plugs and the cover.

In view of this object, the subject of this invention is a plug-carrier for a battery of the aforesaid type, characterised in that the plug bodies and the interconnecting carrier form a monolithic unit and in that the plug bodies are connected to the said carrier by yieldable interconnecting means, which allow the plug bodies to move relative to the carrier, thereby enabling the plug bodies to be aligned with the holes in the cover of the battery.

A further subject of the invention is a battery, in particular a starter battery, which includes a plurality of cells in series and the aforesaid plug carrier.

Additional characteristics and advantages of the invention will become apparent from the detailed description which follows, given with reference to the appended drawings, which are provided purely by way of non-limitative example, in which:

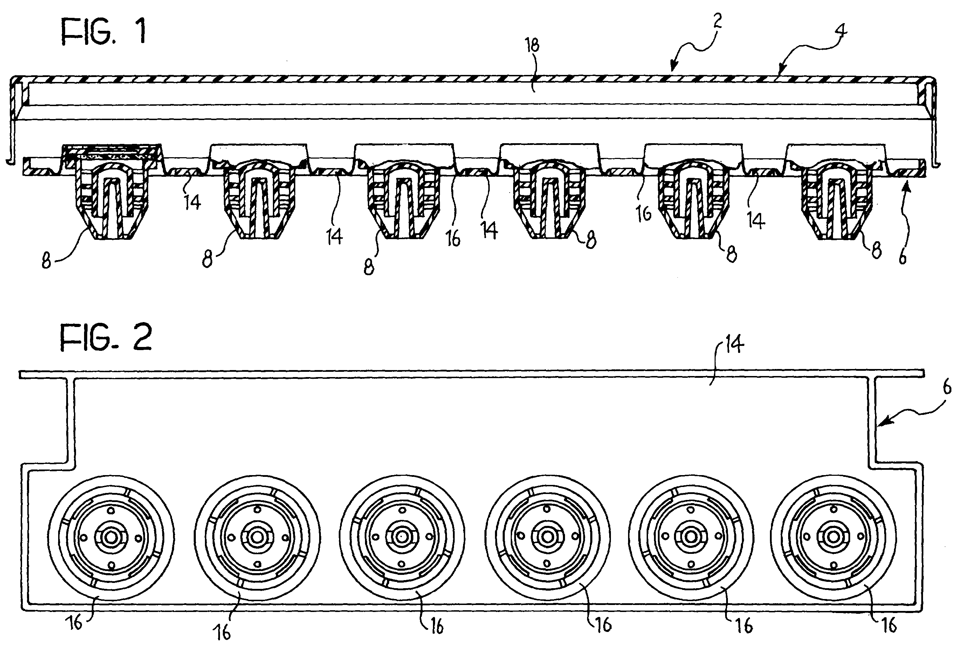

Figure 1 is a partially sectioned and partially exploded front view of a plug carrier of the invention;
Figure 2 is a view from above of the lower shell of the carrier of Figure 1;
Figure 3 is an enlarged, partially sectioned view of a portion of the carrier of Figure 1; and
Figures 4a-4c are sectional views of different embodiments of a portion of the lower shell of the carrier of Figure 1.

For the sake of simplicity, the appended drawings refer to a plug carrier for a normal starter battery, constituted by six cells in series; it is clear, however, that the present invention is equally applicable to batteries constituted by any number of cells in series, intended for uses other than starting a motor vehicle.

In the embodiment shown in the drawings, the plug carrier is generally indicated 2 and comprises an upper shell 4 and a lower shell 6.

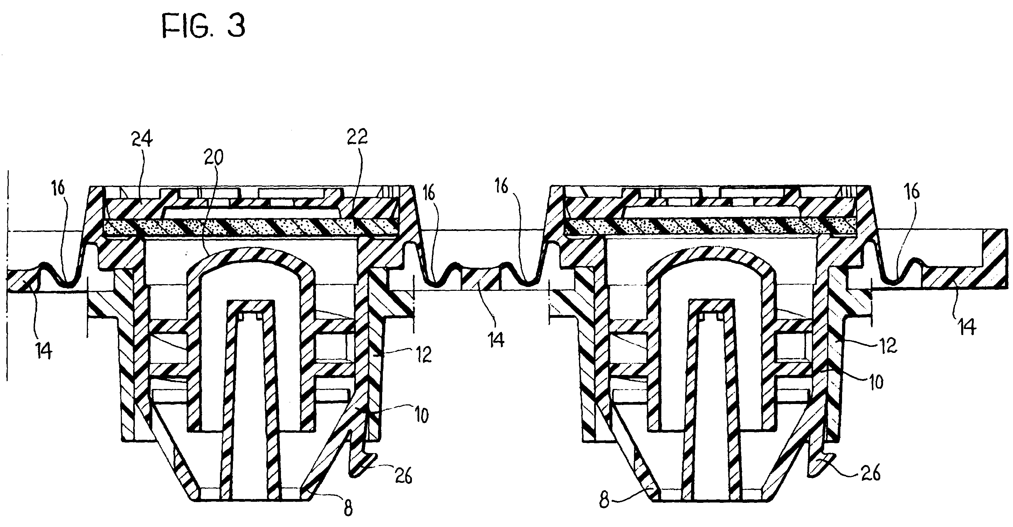

The lower shell 6 includes six plug bodies 8, each including a tubular wall 10, provided for air-tight insertion into complementary holes, indicated 12 in Figure 3, in the battery cover. The plug bodies 8 are connected to each other by an interconnecting carrier element 14 and form a monolithic unit with the said carrier.

It should be understood by this phrase that the plug bodies 8 are integral with the carrier 14, being moulded in one piece with the said carrier, so as to form the monolithic unit of the lower shell 6; alternatively, it could mean that the plug bodies 8 are fixed to the interconnecting carrier 14 by welding, gluing or a simple force fit, thereby ensuring, in any case, that a water-tight and air-tight seal is provided between the plug bodies 8 and the interconnecting carrier 14.

The plug bodies 8 are connected to the carrier element 14 by yieldable interconnecting means 16 which, in the embodiment illustrated, are constituted by elements with a corrugated or grooved profile, having an annular form in plan view, which constitute an integral part of the interconnecting carrier 14 and surround each plug body 8.

The thickness of the corrugated profile elements is preferably less than that of the overall thickness of the interconnecting carrier element 14, in order to provide adequate flexibility and deformability. The said interconnecting means 16 provide the plug bodies 8 with the mobility required to ensure that the axis of each plug body 8, which is orthogonal to the plane of the carrier 14, can be aligned with or made coincident with the axis of one of the complementary holes 12 in the cover, in order to provide an effective seal between plugs and cover.

It is clear that the aforesaid alignment could not be ensured without the said yielding interconnecting means 16, since the plug bodies 8 form a rigid monolithic unit with the carrier element 14. Any small imperfections in the dimensions of the moulds, as well as thermal expansion during normal use of the battery, would prevent the correct alignment from being maintained between the axes of the plugs and holes.

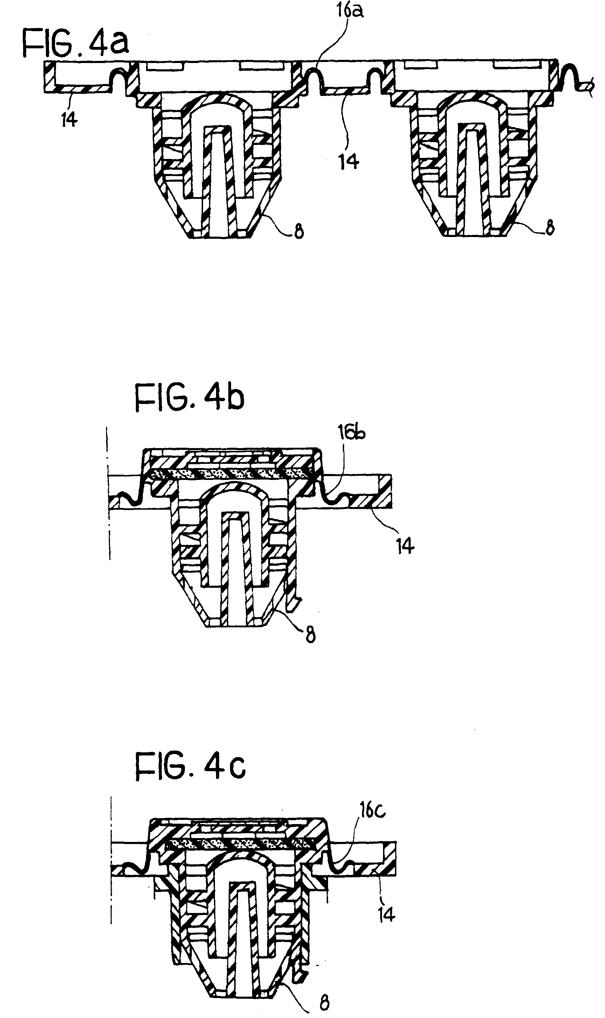

The corrugated section of the interconnecting means 16 can be of any shape able to provide the required flexibility and deformability; in the preferred embodiment, this cross section is typically sinusoidal, but it is clear that other sections could be used, such as a U shape (16a in Figure 4a), a double-U shape, a V shape, a double-V shape or other sinusoidal outlines, such as those illustrated in Figures 4b and 4c, and indicated 16b and 16c.

In the embodiments illustrated, the corrugated profile interconnecting means 16 are annular when viewed in plan and each surround the plug body 8. It is clear, however, that such means could also be constituted by discontinuous annular segments surrounding the plug bodies 8. In addition, the said interconnecting means 16 can be integral to the interconnecting carrier element 14 or, possibly, integral to the plug body 8, in which case the plug bodies 8, with their associated interconnecting means 16, could be fixed to the carrier element 14 with glue or by heat or ultrasonic welding, or by force fitting.

The carrier 2 illustrated includes an upper shell 4 for fitting to the lower shell 6 so as to define an internal chamber 18 which collects the gas discharged by the plugs which are securely attached to the lower shell 6. The upper shell 4 can be fixed to the lower shell 6 by ultrasonic welding, by heat welding, by heating the portions to be joined until they become plastic, by adhesive and possibly by means of an interposed seal element, not shown.

The said chamber 18 communicates with the exterior through a hole formed in the body of the double shell; a porous filter could also be fitted in series with the hole, which would act as a flame-retardant element.

The plug carrier 2 described here is fitted to a battery in such a way that the plugs are force-fitted into the corresponding holes 12 formed in the battery cover; this force fit provides both a hydraulic and a pneumatic seal. The gases which develop inside the battery are discharged through the plug into the space delimited by the two shells, passing next through the porous filter, if one is used, and thus outside through the exhaust hole.

The plug bodies 8 can be of a conventional type per se known, or could be made according to the descriptions given in British Patent Application No. 9814516.2, in the name of the same Applicant.

Each plug body 8 includes, in known manner, a tubular labyrinth element 20 and a semi-permeable membrane filter 22, housed in a seat formed in the top of the plug body 8 and acting to allow the escape of gas from the labyrinth; the said membrane 22 is held in place by a plastics disc 24.

In a preferred embodiment, the tubular wall 10 of at least one plug body 8 is provided with means 26 for clipping it to the cover, constituted, for example, by a tooth; this tooth 26 allows the plug to be inserted in the hole in the cover but prevents it from being extracted. In this way, it is possible to provide a plug carrier 2 which is not removable and thus a tamper-proof battery.

This tooth 26 could be provided on each plug or only one some of them, typically, though not necessarily, on the plug at each end; a plug could also have several teeth.

The plug carrier 2 of the invention which is described above makes it possible to use the gas escape function even on batteries which were not specifically designed for this purpose, and can thus be easily adapted for batteries which are already in use or in production.

## Claims

1. A plug carrier for accumulator batteries, which includes:
- a plurality of plug bodies (8) for insertion into complementary holes (12) in the battery cover; and
- an interconnecting carrier element (14) which connects the said plug bodies (8) to each other,
characterised in that:
- the plug bodies (8) and the carrier (14) form a monolithic unit,
- the plug bodies (8) are connected to the said carrier (14) by yieldable interconnecting means (16) which allow the plug bodies (8) to move relative to the carrier (14) thereby enabling the plug bodies (8) to be aligned with the holes (12) in the cover.

2. A plug carrier according to Claim 1, characterised in that, for each plug body (8), the said yieldable interconnecting means (16) comprise elements (16a, 16b, 16c) having a corrugated profile which are plastically or resiliently deformable.

3. A plug carrier according to Claim 2, characterised in that the thickness, orthogonal to the general plane of the carrier (14), of the said corrugated profile elements (16, 16a, 16b, 16c) is less than that of the carrier (14).

4. A plug carrier according to Claim 2 or Claim 3, characterised in that the said corrugated profile elements (16, 16a, 16b, 16c) are annular, with one surrounding each plug body (8), and the corrugated profile is substantially sinusoidal.

5. A plug carrier according to any of Claims 1 to 4, characterised in that the plug bodies (8) are formed in one piece with the said interconnecting carrier (14) being moulded in one piece with the said carrier (14).

6. A plug carrier according to any of Claims 1 to 4, characterised in that the plug bodies (8) are fixed to the interconnecting carrier (14) by welding, gluing or force fitting, thereby forming the said monolithic unit.

7. A plug carrier according to any preceding Claim, characterised in that at least one plug body (8) has tooth means (26) at its lower end, operable to cooperate with the battery cover to prevent the plug carrier from being removed once it has been fitted to the cover.

8. A plug carrier according to any preceding Claim, characterised in that the said monolithic unit, constituted by the interconnecting carrier (14) and the plug bodies (8), comprises a lower shell element (6) and an upper shell element (4) fixed to the said lower shell (6) so as to define a chamber (18) for collecting the gas discharged by the battery.

9. A plug carrier according to Claim 8, characterised in that the wall of the said collection chamber (18) formed by the two half-shells (4, 6) includes an escape opening with an associated porous filter acting as a flame retardant.

10. An accumulator battery which includes a plug carrier (2) according to any preceding Claim.
